# EUROPEAN PATENT APPLICATION

(11) **EP 1 972 425 A1**
(43) Date of publication of application: **24.09.2008**
(21) Application number: 05815739.7
(22) Date of filing: 15.11.2005
(51) Int. Cl.: B29C 65/74, B29C 59/00, B05B 15/04

(54) **IMPROVED SINGLE STRIP COMPRISING MULTIPLE INDIVIDUAL STRIPS AND PRODUCTION METHOD THEREOF**

(71) Applicant: Boss Auto Import, S.A., 08440 Cardedeu (Barcelona) (ES)
(72) Inventor: TARTER GARRO, Manuel, 08440 Cardadeu (Barcelona) (ES)
(74) Representative: Morgades y Manonelles, Juan Antonio
(86) International application number: PCT/ES2005/000617
(87) International publication number: WO 2007/057477

(57) **Abstract**

The invention refers to a multi-mono-strip served on a sheet of paper in such a way that each strip can be pulled from the sheet by pressing lightly on one end. The sheet of paper acts as the support for the multi-mono-strips, and is also a way to roll it up, so that once it is rolled up to the desired length, forming a spool, it can be dispensed from inside of a box or container with an opening from which the multi-mono-strip can be pulled out by pulling on one end.
Another issue is the procedure for manufacturing the multi-mono-strip from a piece of foam that is a certain length, height, and thickness.

## Description

The invention refers to a multi-mono-strip that comes on a paper sheet, so that each strip can be pulled off of the sheet by pressing slightly on one end. The roll of paper acts as a support for the multi-mono-strips, and also as the medium, allowing the multi-mono-strip to roll up. Once it is rolled up to the desired length, it makes a sort of spool and can be dispensed conventionally, placed inside of a box or container with an opening through which the multi-mono-strip can be pulled out by pulling on one end of it.

Another invention is the procedure for manufacturing the multi-mono-strip, using a piece of foam of a certain length, height, and thickness, appropriate for the measurements of the multi-mono-strip to be manufactured. The procedure to be followed is to cut the shorter side bases of the piece of foam chosen lengthwise to the desired width, and then lengthwise again. This makes the pieces into various strips; then, a part of the strips is treated with an adhesive product using a laminate transfer or similar process, and then the multi-mono-strip is joined lengthwise to a sheet of paper treated with silicone, plastic, paraffin, or something similar. This latter has previously been punched to provide it with an arrangement of screw-jack single holes on which the material of the strips rests, and its sticky surface allows a slight adherence when the multi-mono-strip with its support sheet is rolled up, making a spool.

There are multi-strips on the market which can therefore be considered state-of-the-art; they come in rolls dispensed from a box or container like those described and claimed in European Patent 384.626. There, the multi-strip is obtained from a foam sheet with a layer of adhesive previously placed on one of its larger bases, then, using cutting rollers, the sheet is made into a bunch of strips joined by a lengthwise seam, so that the user must pull on the strips by the ends and then cut them to the desired length, separating the strips from each other by pulling apart these seams. These then become loose strips that are called multi-strips for special application in the field of automobile repair, used to protect surfaces that should not be painted.

In Patent PCT/US92/02031, also part of the state of the art, there is a strip with an adhesive layer on both sides, which can be joined to a surface on one side, while the opposite sticks to another surface, so that the first surface is protected by the second. This application is aimed at the same technical sector, and is also served in spools, so one of the two sides of the strip has a protective paper cover.

Finally, by the same holder of the present invention, there is a "System for manufacturing a rubber weather strip" which is covered by Invention Patent 200202788. This patent describes and claims a way of pressure cutting that consists of some parallel blades arranged to make semi-circular spaces or channels; the blades press on the first rubber net, against rollers that have semi-circular channels that coincide with the spaces or channels between the cutting blades.

The advantages of the multi-mono-strip described in the present document with respect to the current state of known technique is, first of all, the homogeneity of the strips when they come off of the paper support, because as they are manufactured in this multi-mono-strip format, they are each separated from the one next to it on the same surface. Secondly, when they are separated from the paper support, the surface of the strip is separated from the paper without leaving part of the material of the strip torn from it and stuck to the paper sheet. Finally, since it is rolled with the paper protection, there is no tearing due to too much adhesion.

These advantages are achieved by changing the manufacturing format and the operations that make it up, as well as the nature of the product itself in what as known as the state of the art. Basically, in the products that can be found on the market and which can be considered the state of the art, the surface of the strip is usually covered with an adhesive layer and then rolled up into a spool. In other cases, instead of a strip it is a multi-strip beginning with a sheet of foam and continuing on as has been mentioned above, with a false cut using blades at regular distances and an operation of pressure cutting that makes each sheet into a group of rounded strips joined lengthwise by the material itself, which is to say that the blades do not cut, but rather deform the material of the aforementioned strip into round strips without separating them, as is described and claimed in patent 200202788, held by the same party.

Although this manufacturing procedure does not need protective paper, as the multi-strip rolls up on itself, it does produce considerable shrinkage in the central part of the spool, due to too much pressure, arising in combination with too much adhesive, coming from the force used to separate the multi-strip, which is detrimental to the integrity of its surface. This would not be important technically, if the purpose of the strip were not to protect surfaces against dust or paint during any processes of repairing, preparing, or painting surfaces. So if the strip has irregularities on its surface and a loss of mass, this is where foreign bodies can enter; this goes against the essential purpose of this type of product, which requires that it stick to the surface to be protected. Secondly, this adherence must give the strip total waterproofing, and if there are areas where the adhesive has disappeared, these parts will not stick to the surface to be protected.

Other details and characteristics will be shown in the course of the description below, which shows a series of figures that accompany the present report as a sort of practical display to illustrate the invention.

Below is a detailed list of the main parts of the invention described and the state of the art. They are shown in the attached figures: (10) the state-of-the-art multi-strip (11) strip (12) strip (13) adhesive layer(14) lengthwise seam (15) torn surface (16) sheet of paper treated with silicone, plastic, paraffin, or something similar, (17) joint area (18) single holes (19) state-of-the-art multi-strip spool (20) multi-mono-strip described herein (21) portion of the adhesive layer that sticks out (13) (22) multi-mono-strip spool.

Figure 1 is a frontal profile view of a multi-strip (10) as it is made according to the state of the art.

Figure 2 is a close-up of "1", according to figure 1, of the manner in which a strip (11) is joined to other strips in the same plane.

Figure 3 is a frontal side view of a state-of-the-art spool (19) of multi-strips (10) as shown in figure 1.

Figure 4 is a frontal view of a cross-section profile of a multi-strip (10) after being rolled up into a spool (19), according to the state of the art.

Figure 5 is a lengthwise section seen in profile from the front, of the effects of too much pressure on the surface of a strip (11) of a multi-strip (10) when unrolled, with tears occurring, (15) and the surface separating (13) with part of the material (11).

Figure 6 is a frontal cross-section profile of a multi-mono-strip (20) as manufactured according to the new procedure described.

Figure 7 is an outline view of a sheet of paper treated with silicone, plastic, paraffin, or something similar (16) punched lengthwise and at regular intervals with screw-jack single holes (18), on the back of which there are strips stuck (11), marked with broken lines.

Figure 8 is a lengthwise cross-section of A-A' in profile, according to figure 7, of a strip (11) stuck to a sheet of paper treated with silicone, plastic, paraffin, or something similar (16).

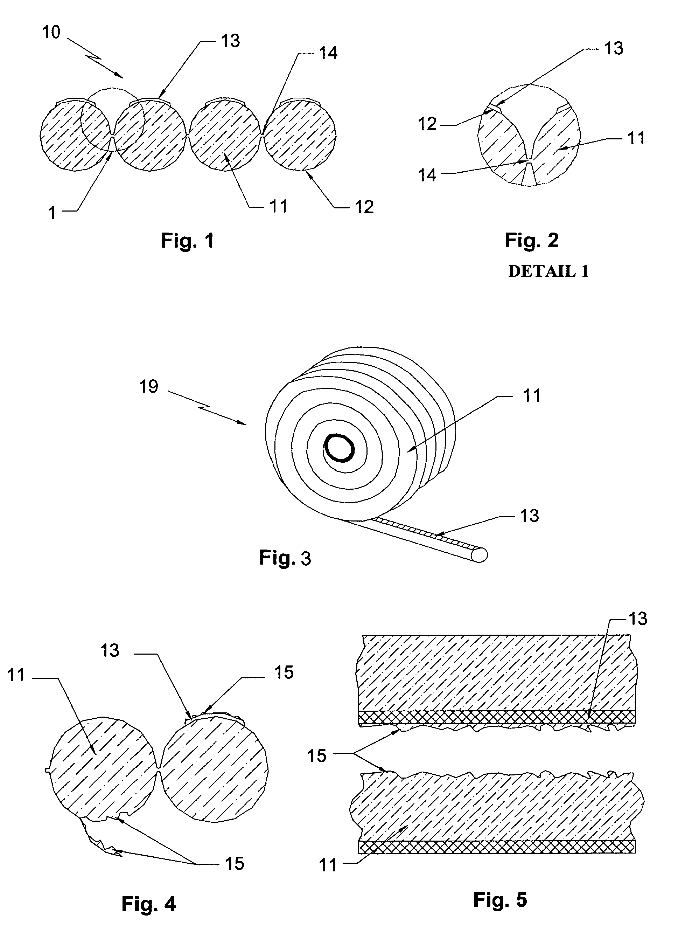

In order to better understand the invention and before describing it, there is a reference to a sample of the state of the art, the multi-strip (10), which can be seen in figures 1 through 5, manufactured as has been previously described in such a way that the multi-strip is made from a piece of polyester foam that is partly cut to make a multi-strip(10), strips joined lengthwise by a seam (14) of the same material, using an operation called "cold welding;" later, on the upper exterior surfaces(11) a layer of adhesive material is placed (13), using a laminate or transfer operation.

The pressure of the rolling of the multi-strip (10) generates an undesired effect when one end of (10) is pulled, which is tearing (15) on the surface of the strips (11), the effects of which are shown in figures 4 and 5, mainly in the spool area (19) closest to the centre. The loss of the torn surface area (15) inevitably involves the loss of part of the adhesive layer (13) of the same, and therefore it is evident that when the strip is used for protection, the parts that have lost this adhesive layer will not stick correctly and uniformly to the surface to be treated, an inconvenience that this invention seeks to remedy.

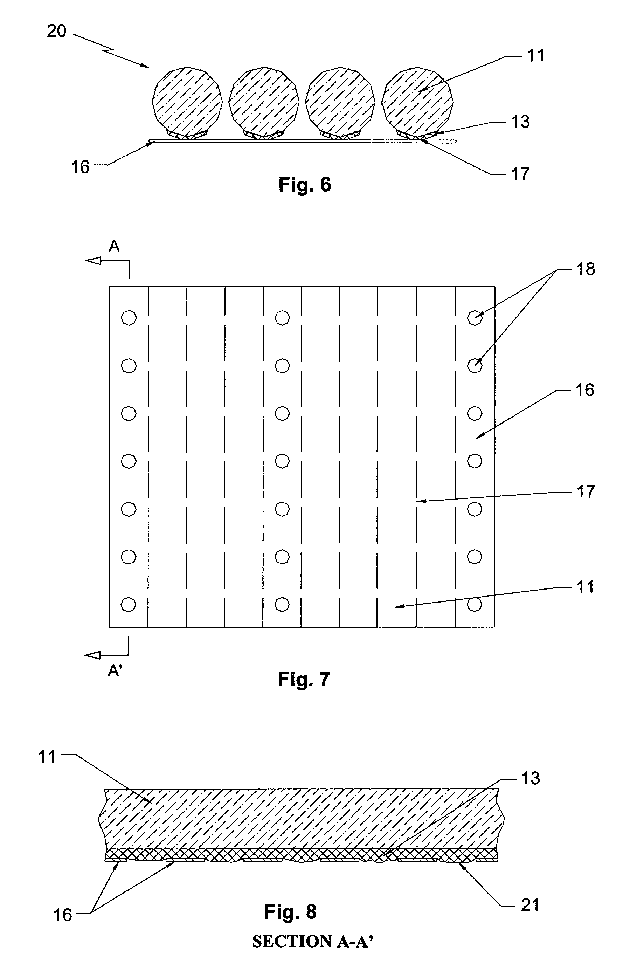

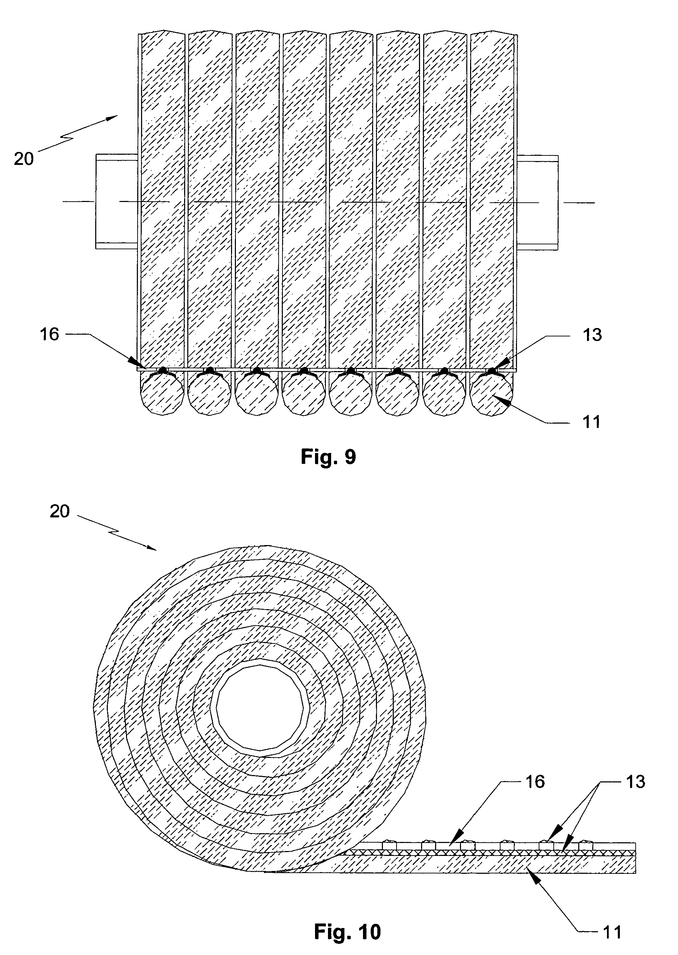

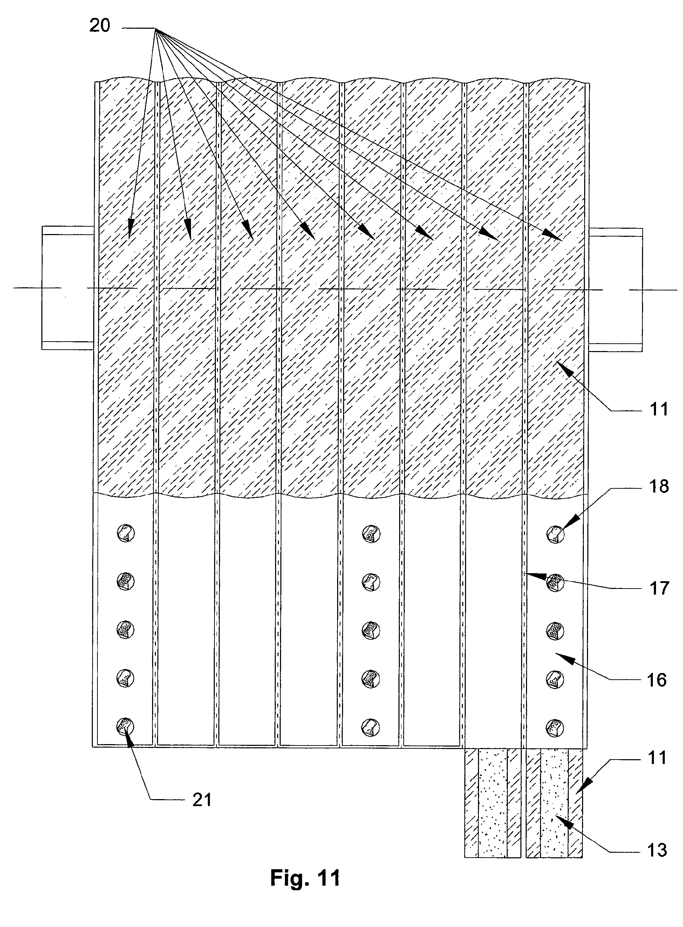

In order to prevent these undesired effects, the concept that is the invention has been designed, showing one way it can be made in figure 6; the multi-mono-strip (20) is made of a sheet of paper(16) that can be treated with silicone, plastic, paraffin, or something similar, on which more than one strip is placed (11) stuck (13) to the paper by a joint line or area (17), so that the aforementioned strips (11) are separated from each other.

The sheet of paper (16) treated with silicone, plastic, paraffin, or something similar, shown in figure 7 presents a lengthwise line of screw-jack single holes (18) at regular intervals, so that the strips (11) rest on the parts of the sheet of paper (16) that are not punched as is shown in figure 8, as well as on these single holes (18), so that the layer of adhesive product (13) that the strip receives (11) also serves, in the parts that stick out (21) through the single holes(18), to join to the foam strip (11), allowing the forming of spools (22) but without the undesired effects on each strip when the strip (11) is removed from the sheet of paper covered with silicone, plastic, paraffin, or similar (16) with much less effort, firstly because the contact surface of the strip (11) with the adhesive is less, and then because the multi-mono-strips (20) are each manufactured separately.

The process of manufacturing a multi-mono-strip (20) begins with cutting a piece of foam lengthwise to a width predetermined by its smaller bases, simultaneously cutting with circular blades arranged in a parallel manner, acting against rollers with channels.

These channels are semi-circular, offering the product a volume that is 20% greater than that on the market. The shape of the multi-mono-strip (20) that is created by the pressure cutting is circular, although the shape is determined by a small lengthwise seam that comes from the foam itself; since it can't be clicked, this means that it has no memory and after being pressed and cut, it does not go back to its original state. Therefore, seeing that this product gives greater volume at the same density, this product is much more ecologically sound and respectful of the environment.

Then the surface of the strips (11) is partially covered with a layer of adhesive material (13), which is finally joined to a sheet of paper (16).

This sheet of paper, treated with silicone, plastic, paraffin, or something similar (16) is punched apart lengthwise until it is shaped like in figure 7, where the broken lines show the position of the strips (11), and figure 8 shows how the material of the adhesive layer (13) sticks out slightly through the single holes(18).

On the other hand, the placing of adhesive material to form a layer (13) on top of the surface of the strips (11) can be replaced by placing the adhesive material on the sides of the paper (16) arranged lengthwise and parallel, according to the future position of the strips (11) in (16).

The multi-mono-strip (20) and the sheet of paper (16) are rolled up in a spool (22) in any of the manners that are already known, with the parts (21) of (13) that stick out from the single holes (18) in (16), as sufficient for keeping it on the spool (19) placed inside of a dispenser box that is not shown in the figures, from which the user takes the strip (11) by pulling on one end until reaching the desired length (11).

Having described the present invention well enough with the attached figures, it is easy to understand that any minor changes deemed appropriate could be made, as long as the essence of the invention summarised in the following claims is not changed.

## Claims

1. "PERFECTED MULTI-MONO-STRIP AND ITS MANUFACTURING PROCEDURE" consists of a group of parallel lengthwise strips, partially covered on the surface with adhesive products that allow the strips to be rolled up and placed inside of a dispenser box, and later removed from the box by pulling on the free end of the strips or group of strips, **characterised by** the strips being stuck to paper treated with silicone, plastic, paraffin, or something similar (16), arranged lengthwise on the paper, parallel to each other, and without any joint between the strips, the multi-mono-strips (20) rolling up and being separated by the sheet of paper (16).

2. "PERFECTED MULTI-MONO-STRIP AND ITS MANUFACTURING PROCEDURE," according to the first claim stating that the adhesive elements of the sheet (16) are set up with a row of single holes passing lengthwise (18) allowing the expansion of the strips (11) and the part of the adhesive layer (13) that sticks out (21) through the single holes (18).

3. "PERFECTED MULTI-MONO-STRIP AND ITS MANUFACTURING PROCEDURE," is **characterised by** the fact that the procedure for manufacturing the multi-mono-strip (20) involves cutting a piece of foam to a certain width, then cutting the piece of foam in strips (11), next partially covering the strips (11) with an adhesive product (13) and later joining the piece of foam cut in strips (11) with the sheet of paper treated with silicone, plastic, paraffin, or something similar (16) previously punched lengthwise, the sheet of paper (16) and strips (11) finally being rolled up in a container.

4. "PERFECTED MULTI-MONO-STRIP AND ITS MANUFACTURING PROCEDURE," according to the first claim, **characterised by** the fact that the strips (11) stick to the sheet of paper (16) because an adhesive product is placed on the curved surface of the strips (11) forming an adhesive layer (13).

5. "PERFECTED MULTI-MONO-STRIP AND ITS MANUFACTURING PROCEDURE," according to the first and fourth claims, **characterised by** the fact that the strips (11) are stuck to the sheet of paper (16) by placing an adhesive product on the sheet of paper treated with silicone, plastic, paraffin, or something similar (16).

6. "PERFECTED MULTI-MONO-STRIP AND ITS MANUFACTURING PROCEDURE," according to the first, fourth, and fifth claims, **characterised by** the fact that the adhesive product occupies a circular sector of the circular surface of the strips (11) of between 40 and 60 degrees.

7. "PERFECTED MULTI-MONO-STRIP AND ITS MANUFACTURING PROCEDURE," according to the first, fourth, and fifth claims, **characterised by** the adhesive product occupying an area of the paper (16) between 5 and 10 mm. wide.

8. "PERFECTED MULTI-MONO-STRIP AND ITS MANUFACTURING PROCEDURE," according to the first, fourth, fifth, sixth, and seventh claims, **characterised by** the fact that the adhesive product is put on the strips (11) through micro drop pressure lamination.

9. "PERFECTED MULTI-MONO-STRIP AND ITS MANUFACTURING PROCEDURE," according to the first, fourth, fifth, sixth, seventh, and eighth claims, **characterised by** the fact that the adhesive product is placed on the strips (11) through the transfer lamination of an adhesive product.

10. "PERFECTED MULTI-MONO-STRIP AND ITS MANUFACTURING PROCEDURE," according to the third claim **characterised by** the fact that the foam is cut into strips (11) using circular blades.

11. "PERFECTED MULTI-MONO-STRIP AND ITS MANUFACTURING PROCEDURE," according to the eighth, ninth, and tenth claims, **characterised by** the fact that the width of the cut is the same for all of the strips (11).

12. "PERFECTED MULTI-MONO-STRIP AND ITS MANUFACTURING PROCEDURE," according to the eighth, ninth, and tenth claims could, on the other hand be **characterised by** the making the width of the cut different for each of the strips (11).

## Amended claims

### Amended claims under Art. 19.1 PCT

**1.** - IMPROVED MULTI-MONO-STRIP AND ITS MANUFACTURING METHOD of those formed by a set of strips parallelly arranged throughout all its length having on its surface adherent goods that allow the direct winding on themselves either indirectly by means of the interposition of a silicon paraffin paper or similar and arranging itself once coiled inside a releasing box the strips or set of strips being extracted of this box, **characterized in that** the strips (10) without no longitudinal entailment among them are adhered cross-sectionally and longitudinally in a sheet (16) and separated by it when coiling the multi-mono-strips (20) on themselves.

**1.** - IMPROVED MULTI-MONO-STRIP AND ITS MANUFACTURING METHOD, according to claim 1 **characterized in that** adherent means of the sheet (16) materialize themselves in an alignment of longitudinal drills (18) that allow the expansion of the strips (11) and their outstanding portion (21) of the layer of adherent (13) by the drills (18).

**2.** IMPROVED MULTI-MONO-STRIP AND ITS MANUFACTURING METHOD, **characterized in that** the manufacturing method of the multi-mono-strip (20) comprises the cut to a given width of a foam piece, then to cut the foam piece in strips (11), followed of a partial covering of the strips (11) with an adherent product (13) and later on assembling of the foam piece cut in strips (11) with the sheet of paraffin silicon laminated paper or similar (16) previously coined longitudinally coined, finally to coil the sheet of paper (16) and strips (11) in a taunted way in a container.

**3.** IMPROVED MULTI-MONO-STRIP AND ITS MANUFACTURING METHOD, according to claim 1 **characterized in that** the adhesion of the strips (11) to the sheet of paper (16) is obtained by the provision of adherent product to the curved surface of the strips (11) forming an adherent layer (13).

**4.** IMPROVED MULTI-MONO-STRIP AND ITS MANUFACTURING METHOD, according to claim 1 and 4 **characterized in that** alternatively the adhesion of the strips (11) to the sheet of paper (16) is obtained by the provision of adherent product to the sheet of silicon, laminated, paraffin paper or similar (16).

**5.** IMPROVED MULTI-MONO-STRIP AND ITS MANUFACTURING METHOD, according to claim 1, 4 and 5 **characterized in that** the adherent product will fill a circular sector of the circular surface of the strips (11) comprising between 40 and 60 degrees.

**6.** IMPROVED MULTI-MONO-STRIP AND ITS MANUFACTURING METHOD, according to claim 1, 4 and 5 **characterized in that** the adherent product will fill a strip in the sheet of paper (16) of between 5 and 10 mm wide.

**7.** IMPROVED MULTI-MONO-STRIP AND ITS MANUFCTURING METHOD, according to claim 1, 4, 5, 6 and 7 **characterized in that** the adherent product will be provided to the strips (11) by means of pressurized lamination of micro drops.

**8.** IMPROVED MULTI-MONO-STRIP AND ITS MANUFACTURING METHOD, according to claim 1, 4, 5, 6, 7 and 8 **characterized in that** the adherent product will be provided to the strips (11) by means of lamination transfer of adherent product.

**9.** IMPROVED MULTI-MONO-STRIP AND ITS MANUFACTURING METHOD, according to claim 3 **characterized in that** the operation of cut of the foam pieces in strips (11) will be by means of circular blades.

**10.** IMPROVED MULTI-MONO-STRIP AND ITS MANUFACTURING METHOD, according to claim 8, 9 and 10 **characterized in that** the width of cut will be the same for all the strips (11).

**11.** IMPROVED MULTI-MONO-STRIP AND ITS MANUFACTURING METHOD, according to claim 8, 9 and 10 **characterized** alternatively in that the width of cut will be unequal for all the strips (11).

**12.** IMPROVED MULTI-MONO-STRIP AND ITS MANUFACTURING METHOD, according to claim 8, 9 and 10 **characterized** alternatively in that the width of cut will be unequal for all the strips (11).
